Europäisches Patentamt

European Patent Office

Office européen des brevets

(19)

(11) Veröffentlichungsnummer : **0 122 554
B1**

(12)

# EUROPÄISCHE PATENTSCHRIFT

(45) Veröffentlichungstag der Patentschrift :
28.03.90

(21) Anmeldenummer : 84103784.9

(22) Anmeldetag : 05.04.84

(51) Int. Cl.⁵ : **D 06 N   3/14**

(54) Verwendung von Vernetzerkombinationen enthaltende Polyurethanzubereitungen als thermoaktive Haftstriche.

(30) Priorität : 13.04.83 DE 3313238

(43) Veröffentlichungstag der Anmeldung :
24.10.84 Patentblatt 84/43

(45) Bekanntmachung des Hinweises auf die Patenterteilung : 28.03.90 Patentblatt 90/13

(84) Benannte Vertragsstaaten :
BE DE FR GB IT NL

(56) Entgegenhaltungen :
EP–A– 0 089 497
DE–A– 2 416 447
DE–A– 3 300 424

(73) Patentinhaber : BAYER AG
D-5090 Leverkusen 1 Bayerwerk (DE)

(72) Erfinder : Thoma, Wilhelm, Dr.
Birkenweg 25
D-5090 Leverkusen 31 (DE)
Erfinder : Pedain, Josef, Dr.
Haferkamp 6
D-5000 Koeln 80 (DE)
Erfinder : Nachtkamp, Klaus, Dr.
Leuchterstrasse 112
D-5000 Koeln 80 (DE)
Erfinder : Schröer, Walter, Dr.
Nicolai-Hartmannstrasse 29
D-5090 Leverkusen 1 (DE)

## Beschreibung

Gegenstand der Erfindung ist die Verwendung von 30 bis 80 gew.-%igen Polyurethanzubereitungen in Form von Lösungen oder Dispersionen, welche in ihrem Feststoffanteil aus

I. 100 Gew.-Teile relativ weicher Polyurethane A) aus höhermolekularen Polyolen, 0,1 bis 2,5 Mol Kettenverlängerungsmitteln pro Mol höhermolekulare Polyole und aliphatischen und/oder aromatischen Polyisocyanaten,

II. 4 bis 30 Gew.-Teile einer Vernetzerkombination aus
B) 0,5 bis 20 Gew.-Teilen an Formaldehydharzen und
C) 0,5 bis 20 Gew.-Teilen an aliphatischen und/oder aromatischen, an ihren NCO-Gruppen gegebenenfalls blockierten Polyisocyanaten wobei die Summe 4-30 Gew.-Teile ausmacht und

III. übliche Mengen an an sich bekannten Zusatzstoffen bestehen, als thermoaktivierbare Haftstriche in Mehrstrich-Thermoaktiv-Umkehrbeschichtungsverfahren und deren thermoaktivierte Kaschierung unter Walzenandruck bei Temperaturen bis 160 °C mit textilen, vorzugsweise bahnenförmigen, Unterlagen, besonders auch mit sehr leichten und gegebenenfalls grobmaschigen Geweben oder Gewirken, und anschließende Vernetzung des Mehrschichten/Textil-Verbundes bei Temperaturen bis 180 °C.

Die Zubereitungen zeigen infolge der Verwendung der Vernetzerkombinationen in den PU-Haftstrichen nach ihrer Vernetzung bei erhöhten Temperaturen überraschend verbesserte Trocken- und Naßhaftwerte.

Die Herstellung von Kunstleder für die verschiedensten Verwendungszwecke wie Oberbekleidung, Schuhobermaterial oder Täschnermaterial aus Polyurethanrohstoffen im Umkehrverfahren ist Stand der Technik. Im allgemeinen wird ein Aufbauprinzip aus zwei oder drei Strichen, z. B. Deck- und Haftstrich, Deck-, Zwischen- und Haftstrich oder Vordeck-, Deck- und Haftstrich, praktiziert. Die Feststoffauflagen pro Strich liegen im allgemeinen zwischen 20 und 60 g/m². Als Rohstoffe dienen Lösungen und Dispersionen von Einkomponenten- und auch Zweikomponenten-Polyurethanen, ferner auch sogenannte High-Solid-Polyurethan-Prepolymere in blockierter Form plus Polyamin-Vernetzern. Die Zweikomponentenpolyurethane erhalten erst durch Vernetzung, die High-Solid-Prepolymere erst nach Reaktion mit den Polyaminen, ihren endgültigen Kunststoffcharakter.

Neuerer Stand der Technik in der Beschichtung textiler, bahnförmiger Unterlagen ist das Thermoaktivierungsverfahren. Hierbei wird die Haftstrich-Steichpaste auf den Deckstrichfilm, der auch aus mehreren Strichen, wie Vordeck- und Deckstrich oder Deck- und Zwischenstrich-Film bestehen kann, gerakelt, das Lösemittel (gemisch) abgedampft, an einem beheizten Zylinder unter Walzenandruck das textile Substrat auf den trockenen, thermisch aktivierten Polyurethan-Haftstrich-Film kaschiert und dieser anschließend bei höherer Temperatur vernetzt. Die Vorteile dieses thermoaktiven Umkehrverfahrens (auch als Transferverfahren bezeichnet) zum Kaschieren liegen in der möglichen niedrigen Haftstrichauflagemenge, z. B. 15 bis 30 g/m², und damit der Herstellbarkeit leichter Artikel, besonders aber in der Verwendungsmöglichkeit von Substraten, die sich für eine « nasse » Kaschierung in einen organische Lösungsmittel oder Wasser enthaltenden Haftstrich von ihrer Konstruktion her oder ihren Lösungsmittelbeständigkeiten nicht oder nur bedingt eignen, z. B. bei Polyacrylunterlagen oder sogenannten Koagulaten, die von den Lösungsmitteln wie DMF u. U. angegriffen werden.

Nachteilig sind die Haftprobleme, die an im Thermoaktivierungs-Transferverfahren hergestellten Artikeln beobachtet werden. Die Haftwerte zwischen Beschichtung und Textilunterlage sind schwankend und besonders die Naßhaftwerte sind relativ niedrig. Aufgabe der Erfindung ist die Beseitigung der bisher bestehenden Nachteile des Thermoaktivierungsverfahrens.

Gegenstand der Erfindung ist die Verwendung von 30 bis 80 gew.-%igen, insbesondere 30 bis 70 gew.-%igen und zumeist 35 bis 60 gew.-%igen Polyurethanzubereitungen in Form von Lösungen oder Dispersionen, die in ihrem Feststoffanteil aus

I) 100 Gew.-Teilen relativ weichen Polyurethanen A), aus höhermolekularen Polyolen mit Molekulargewichten von 600 bis 6000, vorzugsweise Hydroxypolyestern und/oder Hydroxypolyethern, 0,1 bis 2,5 Mol, besonders 0,1 bis 1,0 Mol (bezogen auf höhermolekulare Polyole), gegebenenfalls ionische Gruppen enthaltenden Dialkoholen und/oder Aminoalkoholen und/oder Diaminen und/oder Hydrazinhydrat als Kettenverlängerungsmitteln und aliphatischen oder aromatischen Polyisocyanaten in einem NCO/XH-Verhältnis von 0,9 bis 1,05 aufgebaut,

II) 4 bis 30, vorzugsweise 5 bis 25, besonders bevorzugt 5 bis 22, Gew.-Teilen einer Vernetzerkombination aus
B) 0,5 bis 20, vorzugsweise 1 bis 15, besonders bevorzugt 2 bis 12, Gew.-Teilen an Formaldehydharzen, vorzugsweise Formaldehyd-Harnstoff- und Formaldehyd-Melamin-Harzen oder Polymerisaten mit freien oder mit niederen Alkoholen veretherten Methylolgruppen und zusätzlich deren üblichen, vorzugsweise sauren, Vernetzungskatalysatoren, und

C) 0,5 bis 20, vorzugsweise 3 bis 15, ganz besonders bevorzugt 5 bis 15 Gew.-Teilen an aromatischen und/oder aliphatischen Polyisocyanaten mit mindestens zwei freien oder blockierten NCO-Gruppen, wobei im Fall von Polyurethan-Dispersionen A) nur blockierte, vorzugsweise aromatische, Polyisocyanate verwendet werden, wobei die Summe 4-30 Gew.-Teile ausmacht und gegebenenfalls

III) üblichen Mengen an weiteren, an sich bekannten Zusatzstoffen bestehen, als thermoaktive Haftstriche im Mehrstrich-Thermoaktiv-Umkehrbeschichtungsverfahren durch Rakeln der Haftstrich-Zubereitungen auf Deck- oder Deck- plus Zwischenstriche tragende Trennpapiere oder ähnliche einstweilige Träger, Trocknen der Haftstrichauflage und deren thermoaktivierte Kaschierung unter Walzenandruck bei Temperaturen bis 160 °C, mit textilen Unterlagen und anschließende Vernetzung des Verbundes bei erhöhten Temperaturen, z. B. durch Kanalpassage bei 120 bis 180 °C, vorzugsweise 120 bis 160 °C, unter Bildung von vernetzten Mehrschichten/Textilbeschichtungen hoher Haftwerte.

Der Vorteil des erfindungsgemäßen Verfahrens zur Herstellung von Beschichtungsartikeln aus textilen Flächengebilden und Polyurethanen nach dem Mehrstrich-Umkehrverfahren unter Verwendung eines thermoaktiven Polyurethans als Haftstrich besteht in der Mischvernetzung des Haftstrichsystems mit Formaldehydharzen und Polyisocyanaten (blockierte oder nicht-blockierte NCO-Gruppen), wobei hohe Trocken- und Naßhaftwerte in den Beschichtungen erreicht werden und damit Artikel mit hoher Wasch- und Chemisch-Reinigungsbeständigkeit herstellbar sind. Nach dem Verfahren können auch sehr leichte Gewebe/Gewirke oder sehr offenmaschige Gewebe/Gewirke, die bei der Naßbeschichtung « Durchkaschieren » würden, in sehr dünner Schicht und mit ausgezeichneten Naß- und Trockenhaftungswerten und Chemisch-Reinigungsbeständigkeiten kaschiert werden. Auch sind oft sehr geringe Haftstrichauflagen, z. B. 15 bis 30 g/m², bereits zur Thermokaschierung der Mehrschichtenbeschichtung ausreichend. Es werden Beschichtungen mit hervorragend weichem Griff erhalten.

Die hohen Haftwerte bei Vernetzung der als Haftstrich erfindungsgemäß verwendeten Polyurethanzubereitungen aus Polyurethanlösungen oder Polyurethandispersionen unter Zusatz zweier Vernetzerarten aus Formaldehydharzen und Polyisocyanaten sind überraschend, sie sind aufgrund der mit den einzelnen Vernetzerarten gemachten Erfahrungen nicht zu erwarten. Überraschenderweise ist die Wirkung der beiden Vernetzerarten auf die Haftung der Polyurethanschicht zu den Substraten synergistisch gesteigert.

Die relativ weichen, d. h. bei den Thermokaschiertemperaturen bis 150 °C, vorzugsweise bis 90-125 °C, erweichenden Polyurethane bestehen aus relativ weichen, zumeist nur mäßig hochmolekularen Polyurethanen, welche erst durch eine zusätzliche Vernetzung mit Polyisocyanaten hochwertige Polyurethaneigenschaften erreichen.

Sie werden aus höhermolekularen Polyhydroxylverbindungen des Molekulargewichtsbereichs 600 bis 6000, vorzugsweise 800 bis 4000, aromatischen und/oder (cyclo)aliphatischen Polyisocyanaten und 0,1 bis 2,5 Mol an Kettenverlängerungsmitteln, welche auch ionische Gruppierungen aufweisen können, vorzugsweise 0,1 bis 1,0 Mol Kettenverlängerer pro Mol höhermolekularer Polyhydroxylverbindung, vorzugsweise aus der Reihe der Dialkohole, und/oder Aminoalkohole, Diamine und/oder Hydrazinhydrat und/oder Dihydrazidverbindungen aufgebaut. Vorzugsweise hält man ein NCO/XH-Verhältnis (XH sind die gegenüber Isocyanaten reaktiven Gruppen mit aktiven Wasserstoffatomen) von 0,90 bis 1,05 bei der Herstellung ein oder bricht einen NCO-Überschuß durch monofunktionelle Kettenabbrecher. Die Umsetzung kann dabei in der Schmelze, vorzugsweise in mehrwelligen Reaktionsschneckenmaschinen, oder direkt in Lösung erfolgen. Ebenso sind weiche Polyurethane in Form ihrer wäßrigen, zumeist etwa 30 bis 70 %igen, Dispersionen einsetzbar.

Die Reaktionskomponenten für die Polyurethane A) sind die bekannten Verbindungen, wie sie in der Polyurethanchemie üblicherweise eingesetzt werden und vielfach beschrieben sind.

Die höhermolekularen Polyhydroxylverbindungen sind bevorzugt Dihydroxypolyester-, polylactone-, polycarbonate sowie -polyether oder ihre Mischungen oder Mischkondensate, jedoch können auch höherfunktionelle Polyhydroxylverbindungen oder Polyacetale, Polythioether, Polyesteramide und andere eingesetzt werden.

Als Polyisocyanate werden bevorzugt aromatische und/oder (cyclo)aliphatische Diisocyanate eingesetzt, z. B. die isomeren Toluylendiisocyanate, Diphenyl-4,4′-diisocyanat, Diphenylmethan-4,4′-, -2,4′- und/oder -2,2′-Diisocyanate, 3,3′-Dimethyldiphenyl-4,4′-diisocyanat, Hexamethylendiisocyanat, Lysinesterdiisocyanat, Isophorondiisocyanat, Dicyclohexylmethan-4,4′, -2,4′- und/oder -2,2′-diisocyanate.

Als Kettenverlängerungsmittel dienen insbesondere Butandiol-1,4, -1,3 und/oder -2,3, Ethylenglykol, 2,2-Dimethylpropandiol, Hydrochinon-bis-(2-hydroxyethyl)-ether, Terephthalsäure-bis-(2-hydroxyethyl)-ester oder auch Diamine wie Ethylendiamin, Hexandiamin, Isophorondiamin, Dicyclohexylmethan-4,4′-diamin oder auch Hydrazin(hydrat) oder Terephthalsäuredihydrazid sowie ß-Semicarbazido-propionsäurehydrazid und gegebenenfalls auch Wasser.

Als Lösungsmittel für die Polyurethane dienen Dimethylformamid, Dimethylacetamid, N-Methylpyrrolidon, und andere Amid- und/oder Harnstoff-haltige Lösungsmittel, vorzugsweise jedoch Dimethylformamid, ferner Tetrahydrofuran oder Dioxan, sowie Ketone wie Methylethylketon oder Ester wie Essigsäureethylester. Bevorzugt werden Mischungen aus hochpolaren Lösungsmitteln wie z. B. Dimethylformamid und weniger polaren Lösungsmitteln wie Methylethylketon oder Essigester und gegebenenfalls aromatischen Kohlenwasserstoffen, z. B. Toluol oder Xylol, eingesetzt. In bestimmten Fällen können z. B. auch Mischungen aus aromatischen Kohlenwasserstoffen und niedermolekularen Alkoholen oder Ketonen bzw. cyclischen Ethern, z. B. Toluol und Isopropanol oder Methylethylketon oder Tetrahydrofuran als Lösungsmittel eingesetzt werden.

Die Polyurethane A) werden zumeist aus 30 bis 80 %igen, vorzugsweise 35 bis 60 %igen, Lösungen verarbeitet.

Als relativ weiche Polyurethane A) mit Erweichungsbereichen unter 150 °C werden auch Polyurethane aus Dispersionen eingesetzt. Diese werden in an sich bekannter Weise aus den üblichen Komponenten : höhermolekulare Polyhydroxylverbindungen, z. B. des Molekulargewichtsbereichs 600 bis 6000, Polyisocyanaten, bevorzugt aliphatischen und cycloaliphatischen Diisocyanaten, hydrophilierend wirkenden Substanzen wie überwiegend ethoxygruppenhaltigen mono- oder polyfunktionellen Polyethern und/oder ionische Gruppen aufweisenden Verbindungen (bevorzugt ionischen Kettenverlängerungsmitteln) und üblichen Kettenverlängerungsmitteln (z. B. Dialkoholen und/oder Aminoalkoholen und/oder Diaminen bzw. ihren Bisketiminen und/oder Hydrazinhydrat bzw. seinen Ketazinen) hergestellt. Entsprechende Verfahren zu ihrer Herstellung und geeignete Ausgangskomponenten sind z. B. in den DE-AS 1 097 678, DE-PS 1 184 946, DE-PS 1 178 586, DE-AS 1 237 306, DE-OS 1 495 745, DE-OS 1 595 602, DE-OS 1 770 068, DE-OS 1 913 271, DE-OS 2 019 324, DE-OS 2 811 148, DE-OS 2 446 440, DE-OS 2 725 589, DE-OS 2 732 131 und US-PS 4 192 937 und in entsprechenden Publikationen, z. B. D. Dieterich et al., Ang. Chem. 82, 53 (1970), Angew. Makromol. Chem. 76, 85 (1972) und 98, 133-165 (1981) und Progress in Organic Coatings 9, 281-340 (1981) bzw. den darin aufgeführten Literaturstellen beschrieben.

Die zur Herstellung der Polyurethan-Dispersion verwendeten Ausgangskomponenten : höhermolekulare Polyole, Polyisocyanate und Kettenverlängerungsmittel sind bereits genannt worden.

Zum Einbau von hydrophilen Zentren zur Dispergierbarkeit der Polyurethane werden Polyoxyethylenmono- oder -polyole als alleinige Zentren oder in Abmischung mit ionischen Verbindungen eingesetzt. Die ionischen Verbindungen stellen zumeist anionische Gruppen (z. B. $SO_3^-$ oder Carboxylat- oder Phosphorsäuregruppen) enthaltende Polyole, z. B. Sulfonatdiole nach DE-OS 2 410 862, oder sulfonatgruppenhaltige Polyamine (z. B. mit Ethylen-, Propylen- oder Butansulfon modifizierte Diamine) dar. Auch kationische Gruppen, z. B. Salze von tert. Aminen, sind geeignete hydrophile, ionische Zentren.

Neben den ionischen Kettenverlängerungsmitteln werden auch die üblichen Kettenverlängerungsmittel, wie bereits benannt, mitverwendet.

Die Verwendung von weichen Polyurethanen A) mit Erweichungsbereich unter 150 °C als thermoaktiver Haftstrich in Mehrschichten-Umkehrbeschichtungsverfahren schließt auch die Verwendung von Polyurethanen mit seitenständigen Hydroxyalkylgruppen, welche beispielsweise nach den in der DE-OS 2 732 131 in Form von Dispersionen zugänglich sind, ein.

Die Formaldehydharze B) des Vernetzergemisches II entstammen vorzugsweise Formaldehyd-Harnstoff- und/oder -Melaminharzen, deren Methylolgruppen gegebenenfalls teilweise oder ganz mit Alkoholen, z. B. mit Methanol oder Butanolen, verethert sind. Bevorzugt sind Melaminmethylol-alkylether. Die Harze können lösungsmittelfrei, gelöst in Wasser oder gelöst in Alkoholen wie Methanol, Butanol, Isobutanol oder anderen Alkoholen vorliegen. Die Konzentration dieser Harzlösungen liegt im allgemeinen zwischen 40 und 80 Gew.-%. Es können jedoch auch Methylol(ether)-gruppenhaltige Copolymerisate eingesetzt werden, z. B. Copolymerisate auf Methylolacrylamid-Basis.

Die Polyisocyanate C) der Vernetzerkombination II sind aliphatische und/oder aromatische Polyisocyanate und/oder blockierte aromatische Polyisocyanate, welche mindestens zwei NCO-Funktionen, vorzugsweise drei oder mehr NCO-Funktionen, aufweisen. Die blockierten oder nicht-blockierten Polyisocyanate können lösungsmittelfrei oder als Lösungen eingesetzt werden. Als Blockierungsmittel für die Polyisocyanate kommen Ketoxime, z. B. Methylethylketoxim, Diisobutylketoxim, ferner CH-acide Verbindungen, wie Malonester, Acetessigester oder Phenole wie z. B. Phenol, Nonylphenol und andere Blockierungsmittel wie Caprolactam in Frage. Polyisocyanate der genannten Art sind u. a. biuretisierte, gegebenenfalls uretdionhaltige Polyisocyanate aus aliphatischen oder cycloaliphatischen Diisocyanaten wie Hexandiisocyanat und/oder Isophorondiisocyanat, Cyanurate aus Hexandiisocyanat, Isophorondiisocyanat, Toluylendiisocyanat-2,4/2,6 oder gegebenenfalls Gemische aus solchen Polyisocyanaten oder mischpolymerisierten Polyisocyanaten. Ferner sind geeignet Umsetzungsprodukte aus Trimethylolpropan, Glycerin, Pentaerythrit oder anderen Polyolen im Gemisch mit Dialkoholen wie Diethylenglykol, Butandiol-1,4, Dipropylenglykol und anderen Diolen mit molar überschüssigen Toluylendiisocyanaten, Diphenylmethandiisocyanaten oder ihren Isomerengemischen, ferner Umsetzungsprodukte aus Dialkoholen wie Di- und Triethylenglykol, Di- und Tripopylenglykol mit molar überschüssigen Mengen an Toluylendiisocyanaten oder Diphenylmethandiisocyanaten, einheitlich oder im Gemisch.

Der NCO-Gehalt der Polyisocyanate mit NCO-Gruppen in freier oder blockierter Form liegt zwischen 5 bis 35 %, bevorzugt 10 bis 20 %. Als Blockierungsmittel sind bevorzugt Butanonoxim, Acetessigsäurealkylester und/oder Malonsäurealkylester.

Bei Verwendung von Polyurethan-Dispersionen als A) werden NCO-blockierte, vorzugsweise aromatische, Polyisocyanate verwendet.

Erfindungswesentlich ist die Verwendung einer Mischung aus den zwei verschiedenen Vernetzertypen B) und C) als « Vernetzerkombination » in den Polyurethanen A) des Haftstrichs. Dabei können die Vernetzer den Polyurethanen als Gemisch oder als Einzelsubstanzen, gegebenenfalls bereits bei den

4

Vorstufen der Polyurethanbildung A), zugegeben werden. Erfindungswesentlich ist das Vorliegen und Wirksamwerden beider Vernetzerarten bei der thermischen Vernetzung des Haftstrichs.

Der Anteil an Formaldehydharzen liegt zwischen 0,5 und 20 Gew.-Teilen ; der Anteil an Polyisocyanat C) zwischen 0,5 und 20 Gew.-Teilen, doch soll der Bestandteil an der Vernetzerkombination 30 Gew.-Teile nicht überschreiten, so daß z. B. bei Anwendung von 20 Gew.-Teilen B) maximal noch 10 Gew.-Teile C) eingesetzt werden können.

Den Zubereitungen können weiterhin übliche Zusatzstoffe in üblichen Mengen (zumeist begrenzt bis 20 Gew.-Teile III) pro 100 Teile A) zugegeben werden, z. B. Pigmente, Füllstoffe, Farbstoffe, Verdicker, Verlaufmittel, Silikone wie Dimethylpolysiloxane oder Ethersilikone, Hydrolyse-, Alterungs-, Oxidations- und Lichtschutzmittel, Flammschutzmittel, Fungizide und ähnliche Additive.

Zur Herstellung der Deck-, Vordeck- und Zwischenstrich-Lösungen werden die üblichen Polyurethanlösungen, Polyurethandispersionen oder Polyurethanreaktivsysteme, gegebenenfalls such andere Polymere, z. B. PVC, eingesetzt.

Man trägt dazu auf einen einstweiligen Träger, vorzugsweise Trennpapiere oder gegebenenfalls mustertragende Silikonmatrizen, die Schichten auf, verfestigt diese durch Trocknen bei erhöhten Temperaturen, zumeist zwischen 90 bis 160 ˙C, und bringt zum Schluß den Haftstrich aus der erfindungsgemäßen PU-Zubereitung, z. B. durch Rakeln, auf, z. B. in Dicken von 15 bis 50 g/m², vorzugsweise 15 bis 35 g/m² und trocknet diesen ebenfalls, z. B. bei Temperaturen bis 100 ˙C, insbesondere bei Temperaturen von 60 bis 85 ˙C, in einer Trockenkanalpassage.

Das textile Substrat (Vliese, Gewirke, Gewebe, gefüllte Vliese, vorzugsweise mit mikroporös ausgebildeten Koagulaten gefüllte Vliese) wird unter Walzenandruck an einen, vorzugsweise beheizten, Zylinder mit dem trockenen, thermisch aktivierten (vorzugsweise bei Temperaturen bis 160 ˙C, vorzugsweise 80 bis 125 ˙C) Mehrschichtenfilm auf seiner Haftstrichseite kaschiert und anschließend thermisch bei erhöhten Temperaturen, z. B. bis 180 ˙C, vorzugsweise 120 bis 160 ˙C, vernetzt. Nach Entfernung des einstweiligen Trägers liegt das beschichtete Material vor.

In den Beispielen werden folgende Abkürzungen verwendet :

DMF = Dimethylformamid
TOL = Toluol
IPA = Isopropylalkohol
MEK = Methylethylketon

In der DE-A 2 416 447 werden gegen die Einwirkung von CIV-Licht und Stickstoffoxiden stabilisierte Polyurethanmassen beschrieben, die dadurch gekennzeichnet sind, daß die ein Oxim eines aliphatischen oder cycloaliphatischen Ketons, ein aliphatisches Mono- oder Diisocyanat und/oder ein Aminoplastharz enthalten.

Beispiele

Beispiel 1

1.1 Die PUR-Haftstrichzubereitung zur Herstellung einer Zwei- und Dreistrich-Transferbeschichtung unter thermoaktiver Kaschierung des Substrats ist erfindungsgemäß folgendermaßen zusammengesetzt :

A) 900 g 50 %ige PUR-Lösung in DMF/MEK/TOL = 40/30/30, 30 000 mPa.s/25 ˙C, hergestellt wie folgt : [1 000 g (0,5 Mol) Ethylenglykolpolyadipat, 1 000 g (0,5 Mol) Diethylenglykolpolyadipat, werden in der Schmelze bei 100 ˙C mit 230 g (1,32 Mol) Toluylendiisocyanat-2,4/2,6 (Isomerengemisch 80/20) zu einem NCO-Prepolymeren umgesetzt ; nach Zusatz von 900 g DMF, 680 g MEK, 680 g TOL und 31,8 g Diethylenglykol (0,30 Mol) wird die Polyadditionsreaktion bei 80 ˙C weitergeführt und durch Zusatz von 2,5 g Butanonoxim die weitere Viskositätszunahme der Lösung gestoppt],

B) 40 g Melaminharz (Melaminhexamethylolmethylether), lösemittelfrei

10 g Katalysatorlösung, zusammengesetzt wie folgt : [190 g p-Toluolsulfonsäure, 101 g N-Methylmorpholin 709 g DMF],

C) 50 g Lösung eines blockierten Polyisocyanats : [Isocyanurat aus Hexandiisocyanat-1,6, blockiert mit einem Gemisch aus Malonsäurediethylester/Acetessigsäureethylester (3 : 2), 75 %ig in Ethylglykolacetat/Xylol (1 : 1), blockierter NCO-Gehalt ca. 10 %]
1 000 g
Die PUR-Haftstrichzubereitung ist ca. 53 %ig bei einer Viskosität von ca. 20 000 mPa.s/25 ˙C.

1.2 PUR-Deckstrichlösung (nicht erfindungsgemäß). Man setzt 900 Teile (1,0 Mol) eines Polyesters aus Adipinsäure und Butandiol (mittleres Molekulargewicht 900) mit 87 Teilen (0,5 Mol) Toluylendiisocyanat (65 % 2,4-Isomeres, 35 % 2,6-Isomeres) zu einem Prepolymer um. Das OH-terminierte Prepolymer wird zusammen mit 93 Teilen (1,5 Mol) 1,2-Ethandiol und mit 500 Teilen (2,0 Mol) 4,4'-Diisocyanatodiphenylmethan in 2920 Teilen DMF/MEK (1 : 1) zu einer Polyurethanlösung umgesetzt. Nach Erreichen einer Viskosität von ca. 18 000 mPa.s bei 80 °C wird die Reaktion durch Zugabe von 8 Teilen Butanonoxim abgebrochen. Man erhält eine 35 %ige Lösung mit einer Viskosität von 50 000 mPa.s/23 °C.

1.3 Zweistrich-Transferbeschichtung mit thermoaktivem Haftstrich unter Verwendung der PU-Zubereitung (erfindungsgemäß)

Die Deckstrichlösung wird mit 8 Gew.-% (bezogen auf 1.2) einer 40 %igen TiO$_2$-Pigmentpaste pigmentiert.

Auf einer Beschichtungsmaschine wird mittels Walzenrakel die pigmentierte Deckstrichlösung 1.2 auf ein Trennpapier aufgerakelt (Auftragsmenge 120 g/m$^2$).

Man erhält nach dem Verdampfen der Lösemittel im 1. Kanal bei 120-130-140 °C einen PUR-Deckstrich von ca. 35 g/m$^2$ auf dem Trennpapier.

Am 2. Streichwerk wird auf die Deckstrichbahn die erfindungsgemäße, thermoaktive Haftstrichpaste 1.1, Naßauflage 50 g/m$^2$, gerakelt, im 2. Kanal wird das Lösemittelgemisch bei 60-70-80 °C verdampft, Trockenauflage ca. 25 g/m$^2$. Vor dem 3. Kanal wird die Bahn über einen auf 120 °C geheizten Zylinder geführt, wobei der trockene Haftstrich thermisch aktiviert wird, um dann mit einem PES-Gewebe von 120 g/m$^2$ unter einem Anpreßdruck von ca. 4 bar kaschiert zu werden. Bei der Passage durch den 3. Kanal wird bei 120-140-160 °C die Vernetzung des thermoaktivierten Haftstrichs während des Durchlaufs im Heizkanal (Verweilzeit etwa 2 Minuten) herbeigeführt.

Der Beschichtungsartikel, geeignet zur Konfektionierung von Oberbekleidung, zeichnet sich durch weichen Griff, trockene Oberfläche und Ähnlichkeit mit Nappaleder aus. Er ist wesentlich charakterisiert durch die ausgezeichnete Trocken- und Naßhaftung des PUR zum Textil.

1.4 Versuche mit verschiedenen Vernetzermengen

Die Trocken- und Naßhaftung bei Mischvernetzung mit Harz + Polyisocyanat ist wesentlich besser als bei Vernetzung mit Harz oder Polyisocyanat in der Haftstrichzubereitung 1.1 alleine. Die Werte für die Trocken- und Naßhaftung (in N/2,5 m) ergeben sich dabei wie folgt :

| Vernetzer Gew.-% bezogen auf Streichpaste 1.1 | Trocken-haftung | Naß-haftung | |
|---|---|---|---|
| 4,0 % Melaminharz | 8-10 | 6- 8 | (Vergl.) |
| 9,0 % Melaminharz | 10-12 | 8-10 | " |
| 5,0 % Polyisocyanat | 10-12 | 7-10 | (Vergl.) |
| 9,0 % Polyisocyanat | 12-15 | 10-12 | " |
| 4,0 % Melaminharz 5,0 % Polyisocyanat | 20-25 | 18-22 | (erfin-dungs-gemäß) |

## Beispiel 2

2.1a) Die PUR-Hafstrichzubereitung zur thermoaktiven Kaschierung des Substrats ist folgendermaßen zusammengesetzt :

A) 900 g 50 %ige PUR-Lösung in DMF/TOL/IPA = 40/35/25 ; 50 000 mPa.s/23 °C, hergestellt wie folgt : Man setzt 1700 Teile (1,0 Mol) eines Hydroxylpolyesters aus Adipinsäure und Hexandiol-1,6/Neopentylglykol (65/35 ; Molekulargewicht 1700) mit einem Gemisch aus 333 Teilen (1,5 Mol) Isophorondiisocyanat und 84 Teilen (0,5 Mol) Hexamethylendiisocyanat in 1605 Teilen DMF/TOL (40 : 35), das portionsweise mit ansteigender Viskosität zugegeben wird, um. Zur Kettenverlängerung läßt man mit 45 Teilen (0,9 Mol) Hydrazinhydrat im 535 IPA reagieren. Nachdem die 50 %ige Lösung bei 80 °C eine Viskosität von 18 000 mPa.s erreicht hat (NCO-Gehalt der Lösung 0,1 %) wird die Umsetzung durch Einrühren von 12 Teilen Butanonoxim abgebrochen. Man erhält eine 50 %ige Polyurethanlösung mit einer Viskosität von 50 000 mPa.s/23 °C, die sich beim Lagern nicht ändert.

B) 50 g Melaminharzlösung *, 55 %ig in i-Butanol

10 g Katalysatorlösung wie Beispiel 1

C) 40 g Lösung eines blockierten Polyisocyanats (Isocyanurat aus Hexandiisocyanat-1,6, blockiert mit Butanonoxim, 75 %ig in Ethylglykolacetat, blockierter NCO-Gehalt ca. 10 %).

$\overline{1\ 000\ g}$

* Maprenal MF-800 (Hoechst AG)

6

2.1b) PUR-Haftstrichzubereitung zur thermoaktiven Kaschierung (unter Verwendung zweier verschiedener Polyurethane)

A/1 800 g 50 %ige PUR-Lösung in DMF/TOL/IPA = 40/35/25, 50 000 mPa.s/25 ˙C wie in 2.1a)

A/2 100 g 30 %ige PUR-Lösung in TOL/IPA/EG = 29 : 29 : 12, 22 000 mPa.s/25 ˙C wie in 2.2

B) 50 g Melaminharz *, 55 %ig in i-Butanol

10 g Katalysatorlösung wie in Beispiel 1

C) 40 g blockierten Polyisocyanat wie in 2.1a)

1 000 g

Die PUR-Haftstrichzubereitung ist ca. 49 %ig bei einer Viskosität zu 30 000 mPa.s/25 ˙C.

2.2 PUR-Deckstrichlösung (nicht erfindungsgemäß)

Die Deckstrichpaste ist eine TiO$_2$-pigmentierte 30 %ige Lösung eines aliphatischen Einkomponenten-Polyesterurethans in Toluol/Isopropanol/Ethylglykol = 29 : 29 : 12 mit einer Viskosität von 22 000 mPa.s/25 ˙C. Das PUR wird durch Umsetzung eines NCO-Prepolymeren aus 1 700 g (1,0 Mol) eines Polyesters aus Hexandiol-1,6, Neopentylglykol (Verhältnis 65/35) und Adipinsäure, und 490 g (2,2 Mol) Isophorondiisocyanat, mit 205 g (1,2 Mol) Isophorondiamin in Lösung hergestellt.

2.3 PUR-Vordeckstrichlösung (nicht erfindungsgemäB)

216 g (125 Mol) des unter 2.2 beschriebenen Polyesters und 76 g (0,190 Mol) eines Polyesters aus Phthalsäure und Ethylenglykol werden mit 205 g (0,925 Mol), 1-Isocyanatomethyl-5-isocyanato-1,3,3-trimethylcyclohexan (IPDI) vermischt und bei 80 ˙C bis zu einem konstanten NCO-Gehalt von 10,2 % umgesetzt. Man läßt danach auf Raumtemperatur abkühlen, verdünnt mit 600 g Toluol, gibt zu der Lösung noch 400 g Isopropanol und fügt dann nach und nach eine Lösung von 103 g (0,605 Mol) 1-Aminomethyl-5-amino-1,3,3-trimethylcyclohexan (IPDA) und 200 g Isopropanol zu und verdünnt schließlich noch mit 200 g Ethylglykol.

Man erhält 2 000 g einer 30 %igen PUR-Lösung in Toluol/Isopropanol/Ethylglykol mit einer Viskosität von 14 000 mPa.s bei 25 ˙C.

2.4 Dreistrich-Transferbeschichtung mit thermoaktivem Haftstrich 2.1 (erfindungsgemäße Verwendung)

Die unpigmentierte Vordeckstrich-Lösung (2.3) wird auf ein Trennpapier gerakelt, Naßauflage ca. 20 g/m$^2$; nach dem Trocknen (60-80-120 ˙C) liegt ein dünner Vordeckstrich von ca. 8 g/m$^2$ auf dem Trennläufer. Auf diesen wird mit der pigmentierten Paste (2.2) ein Deckstrich gerakelt, der nach dem Trocknen (70-90-120 ˙C) ein Gewicht von 25 g/m$^2$ hat.

Auf diesen Verbund aus Vordeckstrich und Deckstrich wird mit den Haftstrichpasten 2.1a) bzw. 2.1b) der thermoaktivierbare Haftstrich aufgerakelt, Naßauflage 60 g/m$^2$, Trockenauflage ca. 30 g/m$^2$, Trocknung erfolgt bei 60-70-80 ˙C. Anschließend wird die Bahn über einen auf 125 ˙C beheizten Zylinder geführt und unter thermischer Aktivierung des trockenen Haftstriches mit einer Koagulatware (durch mikroporöses PU-Koagulat gefülltes Vlies) von 200 g/m$^2$ kaschiert. Anpreßdruck beim Kaschieren ca. 5 bar. Anschließend wird in einer weiteren Kanalpassage bei 120-140-160 ˙C der thermoaktivierte Haftstrich vernetzt.

Man erhält füllige, weiche, voluminöse Artikel von ansprechendem Griff und interessantem Narbenwurf. Die Werte der Trocken- und Naßhaftung sind ausgezeichnet : 37 N/2,5 cm (33 N/2,5 cm) bei Haftstrich 2.1a) und 40 N/2,5 cm (38 N/2,5 cm) bei 2.1b).

Beispiel 3

3.1 PUR-Haftstrichzubereitung zur thermoaktiven Kaschierung (erfindungsgemäß)

A) 885 g PUR-Lösung 70 % in DMF, 60 000 mPa.s/25 ˙C, hergestellt wie folgt : 1 000 g (0,50 Mol) Dihydroxy-propylen-glykolpolyether, 54,0 g (0,60 Mol) Butandiol-1,4 und 191 g (1,10 Mol) Toluylendiisocyanat-2,4/2,6 (Isomerengemisch 80/20) werden bei 80-90 ˙C in der Schmelze umgesetzt, in 535 g DMF gelöst, mit 2,0 g N-Methyl-ethanolamin wird die Reaktion abgebrochen.

B) 50 g Melaminharz (wie in Beispiel 1.1), lösemittelfrei

15 g Katalysatorlösung, hergestellt aus [190 g p-Toluolsulfonsäure, 149 g Triethanolamin in 661 g DMF] ;

C) 20 g Polyisocyanat, NCO-Gehalt ca. 20 % (biuretisiertes 1,6-Hexandiisocyanat)

30 g Polyisocyanat, NCO-Gehalt ca. 20 % (Umsetzungsprodukt aus 1,0 Mol Tripropylenglykol und 5,0 Mol 4,4'-Diphenylmethandiisocyanat).

1 000 g

Die PUR-Haftstrichzubereitung ist ca. 72 %ig in DMF, Viskosität 42 000 mPa.s/25 ˙C.

* wie in 2.1.a.B)

7

### 3.2 PUR-Deckstrichlösung (nicht erfindungsgemäß)

2250 Teile (1,0 Mol) eines Hydroxylpolyesters aus Adipinsäure und Butandiol-1,4 (Molekulargewicht 2250), 283 Teile (4,56 Mol) Ethandiol und 22 Teile (0,24 Mol) 1,4-Butandiol werden mit 1452 Teilen (5,8 Mol) 4,4′-Diisocyanatodiphenylmethan in 7441 Teilen eines Gemisches aus DMF/MEK/TOL (60 : 25 : 15) umgesetzt. Nach Erreichen einer Viskosität bei 80 °C von ungefähr 12 000 mPa.s und einem NCO-Gehalt der Lösung von 0,1 % werden 24 Teile Butanonoxim zugegeben, und es wird ca. 1 Stunde bei 80 °C nachgerührt. Man erhält eine 35 %ige Polyurethanlösung mit einer Viskosität von 36 000 mPa.s/23 °C.

### 3.3 Zweistrich-Transferbeschichtung mit thermoaktivem Haftstrich 3.1 (erfindungsgemäße Verwendung)

Nach Pigmentierung mit 10 % einer handelsüblichen 40 %igen Farbpaste (wie in Beispiel 4.3) wird aus der Deckstrichlösung 3.2 in üblicher Rakeltechnik ein Deckstrich auf einem geprägten Trennpapier hergestellt ; Trockengewicht 30 g/m². Nach der in Beispiel 1.3 beschriebenen Technik wird der thermoaktivierbare Haftstrich 3.1 auf den Deckstrich appliziert (40 g/m² Trockengewicht) und nach thermischer Aktivierung bei 100 °C mit einem gerauhten Baumwollgewebe von 220 g/m² kaschiert. Vernetzung erfolgt bei 120-140-160 °C. Der für Schuhobermaterial geeignete Artikel weist guten Narbenwurf und hervorragende Haftung zum Substrat auf ; trocken : 42 N/2,5 cm ; naß : 38 N/2,5 cm.

## Beispiel 4

### 4.1 PUR-Haftstrichzubereitung zur thermoaktiven Kaschierung (erfindungsgemäß) :

A) 900 g PUR-Lösung 50 %ig in DMF/TOL/IPA = 40/30/30, 20 000 mPa.s/25 °C, hergestellt wie folgt : [1 700 g (1,0 Mol) des in 2.2 beschriebenen Polyesters werden mit 87,0 g (0,50 Mol) Toluylendiisocyanat-2,4/2,6 (Isomerengemisch 80/20) in der Schmelze bei 90 °C umgesetzt. Anschließend führt man die Reaktion nach Zugabe von 222 g (1,0 Mol) Isophorondiisocyanat bei 90 °C weiter zur Gewinnung eines NCO-Prepolymeren. Dieses wird in einem Gemisch von 840 g DMF und 625 g TOL gelöst. Unter Rühren fügt man eine Lösung von 12,5 g (0,25 Mol) Hydrazinhydrat und 65,5 g 4,4′-Diamino-dicyclohexylmethan (0,25 Mol) in 625 g IPA als Kettenverlängerer zum Aufbau des Polyurethanharnstoffes hinzu. Die Reaktion wird durch Zugabe von 5 g Butanonoxim abgestoppt].

B) 40 g Melaminharz *, 70 %ig in i-Butanol
10 g Katalysatorlösung wie in 3.1
<u>C) 50 g blockiertes Polyisocyanat wie in 1.1</u>
<u>1 000 g</u>

Die PUR-Haftstrichzubereitung ist ca. 52 %ig mit einer Viskosität von 12 000 mPa.s bei 25 °C.

### 4.2 PUR-Deckstrichlösung (nicht erfindungsgemäß)

Die Deckstrichlösung ist eine 25 %ige Lösung eines Polycarbonat-polyesterurethans in DMF mit einer Viskosität von 10 000 mPa.s/25 °C. Das Polycarbonatpolyesterurethan wird durch Schmelzkondensation von 1 000 g (0,5 Mol) Hexandiolpolycarbonat, 1 125 g (0,5 Mol) eines Butandiol-1,4-adipats, 270 g Butandiol-1,4 (3,0 Mol) und der hierzu äquivalenten Menge 4,4′-Diphenylmethandiisocyanat (1 000 g) hergestellt.

### 4.3 Zweistrich-Transferbeschichtung mit thermoaktivem Haftstrich (erfindungsgemäße Verwendung)

Nach Pigmentierung mit 12 % einer handelsüblichen, 40 % TiO₂ aufweisenden, Farbpaste wird mit der Deckstrichlösung 4.2 in bekannter Rakeltechnik ein Deckstrich auf geprägtem Papier von ca. 30 g/m² Trockengewicht erzeugt. Nach der in Beispiel 1.3 beschriebenen Technik wird der thermoaktivierbare Haftstrich 4.1 auf den Deckstrich mit 35 g/m² Trockenauflage gerakelt, und nach thermischer Aktivierung bei 120 °C mit einer elastischen Wirkware aus Polyacrylfasern (180 g/m²) kaschiert. Vernetzung bei 140-150-160 °C. Der hochelastische Artikel, für Sportbekleidung (z. B. Surfanzüge) geeignet, zeichnet sich durch hohe Haftung auf der textilen Unterlage aus ; trocken : 40 N/2,5 cm, naß 38 N/2,5 cm.

## Beispiel 5

### 5.1 PUR-Haftstrichzubereitung zur thermoaktiven Kaschierung (erfindungsgemäß)

A/1 675 g 50 %ige PUR-Lösung in MEK/TOL = 3 : 1, 20 000 mPa.s/25 °C, hergestellt wie folgt : 2 000 g (1,0 Mol) Diethylenglykolpolyadipat werden in der Schmelze mit 244 g (1,40 Mol) Toluylendiisocyanat-2,4/2,6 (Isomerengemisch 80/20) zu einem NCO-Prepolymer umgesetzt und nach Lösen in 570 g TOL und 1 710 g MEK mit 36,0 g (0,40 Mol) Butandiol-1,3 bei 80 °C zum Polyurethan polyaddiert. Durch Zugabe von 2,5 g Butanonoxim wird die Polyadditionsreaktion gestoppt.

A/2 200 g 35 %ige PUR-Lösung in DMF/MEK = 1 : 1, 40 000 mPa.s/25 °C, hergestellt wie folgt : 800 g (1,0 Mol) Hexandiol-1,6-polyadipat und 174 g (1,0 Mol) Toluylendiisocyanat-2,4/2,6 (Isomerengemisch 65/35) werden in der Schmelze zum Polyesterpolyurethan umgesetzt und unter Kühlung granuliert. 350 g Granulat werden in 325 g DMF + 325 g MEK gelöst.

* Maprenal MF-927 (Hoechst AG)

B) 45 g Melaminharz *, lösemittelfrei

10 g Katalysatorlösung wie in 1.1

C) 70 g Polyisocyanat, 60 % in Butylacetat, NCO-Gehalt ca. 10 % [Isocyanurat aus Hexandiisocyanat-1,6 (1,0 Mol) und Toluylendiisocyanat-2,4/2,6 (2,0 Mol)].

1 000 g

Die PUR-Haftstrichzubereitung ist ca. 50 %ig mit einer Viskosität von 23 000 mPa.s bei 25 °C.

5.2 PUR-Deckstrichlösung (nicht erfindungsgemäß)

1 000 g (0,5 Mol) Butandiol-1,4-polyadipat, 113 g (1,25 Mol) Butandiol-1,4, 78,0 g (1,25 Mol) Ethylenglykol und 750 g (3,0 Mol) 4,4'-Diphenylmethandiisocyanat werden in einer Reaktionsschnecke in der Schmelze zum PUR polyaddiert und unter Abkühlung granuliert. Die 25 %ige Lösung des PUR in DMF/TOL/MEK = 1 : 1 : 1 hat eine Viskosität von 10 000 mPa.s/25 °C.

5.3 Zweistrich-Transferbeschichtung mit thermoaktivem Haftstrich (erfindungsgemäße Verwendung)

Auf einen 30 g/m² schweren Deckstrich aus 5.2 wird nach der in Beispiel 1.3 beschriebenen Technik der thermoaktivierbare Haftstrich 5.1 gerakelt, Trockenauflage 20 g/m². Nach thermischer Aktivierung am beheizten Stahlzylinder bei 115 °C wird eine Zellwollware von 100 g/m² (lockere Gewebekonstruktion) kaschiert ; Anpreßdruck 4 bar, Vernetzung 120-140-160 °C. Der leichte Zellwollartikel von insgesamt ca. 150 g/m² Warengewicht eignet sich für leichte Oberbekleidung. Die Wasch- und CR-beständige Ware weist gute Haftung auf.

In einer anderen Ausführungsform wird der Haftstrich 5.1 bei 80-100 °C getrocknet, das Kaschieren erfolgt am Stahlzylinder bei 20 bis 30 °C bei einem Anpreßdruck von 6 bar ; Vernetzung 130-150-160 °C.

Beispiel 6

6.1 PUR-Haftstrichzubereitung zur thermoaktiven Kaschierung (erfindungsgemäß)

A) 850 g 50 %ige PUR-Lösung in MEK/TOL = 3 : 1, 35 000 mPa.s/25 °C, hergestellt wie folgt : 720 g (0,90 Mol) 1,6-Hexandiolpolyadipat, 170 g (0,10 Mol) Mischpolyadipat aus 1,6-Hexandiol und Neopentylglykol (Verhältnis 65/35) werden in der Schmelze mit 260 g (1,50 Mol) Toluylendiisocyanat-2,4/2,6 (Isomerengemisch 80/20) zu einem NCO-Prepolymer umgesetzt und nach Lösen in 300 g TOL und 900 g MEK mit 45,0 g (0,50 Mol) Butandiol-1,4 bei 80 °C zum PUR polyaddiert.

B) 80 g Formaldehydharnstoffharz, 50 %ig in i-Butanol

15 g Katalysatorlösung wie in 1.1

C) 55 g blockiertes Polyisocyanat aus Tripropylenglykol (1,0 Mol), 4,4'-Diphenylmethandiisocyanat (5,0 Mol) und Butanonoxim (8,0 Mol), 50 %ig in MEK/Ethylglykolacetat = 1 : 1, blockierter NCO-Gehalt ca. 10 %.

1 000 g

Die PUR-Zubereitung ist ca. 50 %ig und hat eine Viskosität von 27 000 mPa.s/25 °C.

6.2 PUR-Deckstrichlösung (nicht erfindungsgemäß)

1 000 g (0,5 Mol) Butandiol-1,4-polyadipat, 300 g (1,35 Mol) Isophorondiisocyanat werden in einer Reaktionsschnecke in der Schmelze zum Prepolymer umgesetzt. Nach Einspeisen von 222 g (0,85 Mol) 4,4'-Diamino-dicyclohexylmethan wird in der Schmelze der Polyurethanharnstoff aufgebaut ; es folgt Extrudieren, Abkühlen, Granulieren. Die 25 %ige Lösung des Granulats in Toluol/Isopropanol/Ethylglykol hat eine Viskosität von 12 000 mPa.s/25 °C.

6.3 Zweistrich-Transferbeschichtung mit thermoaktivem Haftstrich (erfindungsgemäße Verwendung)

Auf einen 25 g/m² schweren Deckstrich aus 6.2 wird nach der in Beispiel 1.3 beschriebenen Technik der thermoaktive Haftstrich 6.1 gerakelt. Trockenauflage 25 g/m². Nach Thermoaktivierung am beheizten Stahlzylinder bei 120 °C wird eine weitmaschige Polyamidwirkware mit einem Warengewicht von 100 g/m² kaschiert. Anpreßdruck 4 bar, Vernetzung 120-140-160 °C. Der leichte, elastische Artikel ist für Oberbekleidung geeignet. Bei guter Wasch- und Chemisch-Reinigungsbeständigkeit zeichnet sich die Ware durch hervorragende Haftung aus.

Beispiel 7

7.1a) PUR-Haftstrichzubereitung zur thermoaktiven Kaschierung (erfindungsgemäß)

A) 930 g 40 %ige anionische PUR-Dispersion in Wasser 1 721 g Diethylenglykoladipat (Molgewicht 2500), 213 g 1,2-Propylenglykolpolyether (Molgewicht 1000), 107 g Polyether aus 85 % Ethylenoxid und 15 % Propylenoxid, gestartet auf n-Butanol (Molgewicht 2150), 205 g propoxyliertes Addukt aus 2-Butendiol-1,4 und Natriumbisulfit (Molgewicht 425) werden nach dem Entwässern im Vakuum bei 100 °C mit 392 g Toluylendiisocyanat-2,4/2,6 (Isomerengemisch 65/35) in der Schmelze zum NCO-Prepolymeren bei 100 °C

* Maprenal MF-927 (Hoechst AG)

umgesetzt. Man führt die Reaktion bis zum Erreichen eines NCO-Gehaltes von 3,0 % fort. Die Schmelze wird auf 50 °C abgekühlt und unter Rühren mit 67,0 g Acetonazin vermischt. Unter gutem Rühren läßt man 4 050 g Wasser (entionisiert) zufließen. Die so erhaltene anionische Dispersion wird bei 70 °C 5 Stunden lang nachgerührt und dann auf Raumtemperatur agbekühlt. Die Dispersion hat einen Feststoffgehalt von 40 %.

    B) 15 g Melaminharz *, 50 %ig in Wasser

    10 g Katalysatorlösung

    C) 45 g blockiertes Polyisocyanat (Isocyanurat wie in 1.1)

    <u>1 000 g</u>

Die ca. 42 %ige PUR-Haftstrichzubereitung wird zur Einstellung der Streichviskosität mit 1,5 % einer Polyacrylsäurelösung in Wasser versetzt, der pH-Wert mit konzentriertem Ammoniak auf 8 bis 9 eingestellt; Viskosität ca. 6 000 mPa.s/25 °C.

7.1b) PUR-Haftstrichzubereitung zur thermoaktiven Kaschierung (erfindungsgemäß)

    A) 800 g 40 %ige PUR-Dispersion in Wasser gemäß 7.1a) 125 g 50 %ige aliphatische PUR-Dispersion 1 700 g (1,0 Mol) eines Mischpolyesters aus Hexandiol-1,6, Neopentylglykol und Adipinsäure werden mit 303 g (1,8 Mol) Hexan-1,6-di-isocyanat zu einem NCO-Prepolymeren umgesetzt; dieses wird in wäßriger Dispersion mit 152 g (0,8 Mol) ethylendiaminethylsulfonsaurem Natrium als Kettenverlängerer zum Polyesterurethanharnstoff aufgebaut, Feststoffgehalt 50 %.

    B) 15 g Melaminharz (Cassurit-HML) 50 %ig in Wasser gelöst

    10 g Katalysatorlösung nach Beispiel 1

    C) 50 g blockiertes Polyisocyanat wie in 1.1, NCO-Gehalt ca. 10 %.

    <u>1 000 g</u>

Die ca. 43 %ige PUR-Haftstrichzubereitung wird zur Einstellung der Streichviskosität mit 1,0 % einer 10 %igen Polyacrylsäurelösung in Wasser versetzt, der pH-Wert mit konzentriertem Ammoniak auf 8 bis 9 eingestellt; Viskosität ca. 8 000 mPa.s bei 25 °C.

7.1c) PUR-Haftstrichzubereitung zur thermoaktiven Kaschierung (erfindungsgemäß) 800 g 40 %ige PUR-Dispersion in Wasser, hergestellt wie folgt: 2 638 g des unter 7.1a) in der Schmelze hergestellten NCO-Prepolymeren, NCO-Gehalt 3,0 %, wird nach Abkühlen auf 50 °C mit 67,0 g Acetonazin und 335 g blockiertem Polyisocyanat (hergestellt gemäß 1.1) vermischt. In die Mischung werden 4 440 g entionisiertes Wasser eingerührt. Die so erhaltene Dispersion wird bei 70 °C 5 Stunden lang nachgerührt und dann auf Raumtemperatur abgekühlt; Feststoffgehalt 40 %.

    175 g Polyacrylat-Dispersion, 40 %ig in Wasser (Mischpolymerisat aus 300 g Acrylsäurebutylester, 80 g Styrol und 20 g N-Methylolacrylamid in 600 g Wasser)

    15 g Melaminharz (Cassurit-HML), 50 %ig in Wasser

    10 g Katalysatorlösung, wie in 1.1

    <u>1 000 g</u>

Die ca. 40 %ige Haftstrichzubereitung wird zur Einstellung der Streichviskosität mit 1,5 % einer 10 %igen Polyacrylsäurelösung in Wasser verdickt. Viskosität ca. 6 000 mPa.s/25 °C.

7.2 PUR-Deckstrich aus Dispersion (nicht erfindungsgemäß)

    545 g PUR-Dispersion, 50 %ig wie in 7.1b) beschrieben;

    455 g PUR-Dispersion, 40 %ig, hergestellt aus:

    485 g Hexandiol-1,6-polyadipat (OH-Zahl 134)

     20 g Trimethylolpropan

     85 g propoxyliertes Addukt aus 2-Butendiol-1,4 und $NaHSO_3$ (Molgewicht 425)

    365 g 4,4'-Dicyclohexylmethandiisocyanat

     67 g 1,6-Hexandiisocyanat

     50 g Acetonazin

    107 g N-Methylpyrrolidon

    1 500 g entsalztes Wasser,

    Durchführung: vgl. DE-A 2 811 148

1000 Teile PUR-Deckstrich-Dispersion, ca. 45 %ig, werden mit 15 Teilen Polyacrylsäureverdicker und 100 Teilen einer wäßrigen Pigmentpräparation (wie in Beispiel 4.3) verrührt. Nach Einstellung des pH-Werts auf 8 bis 9 mit konzentriertem Ammoniak hat die Streichpaste eine Viskosität von ca. 10 000 mPa.s bei 25 °C.

7.3 Zweistrich-Transferbeschichtung mit thermoaktivem Haftstrich (erfindungsgemäße Verwendung)

Auf einen 28 g/m² schweren Deckstrich, hergestellt aus der Dispersionsstreichpaste 7.2, werden nach der im Beispiel 1.3 beschriebenen Technik die thermoaktiven Haftstrichpasten 7.1a), 7.1b) bzw. 7.1c) gerakelt, Trockenauflage 22-25 g/m². Nach Thermoaktivierung an einem auf 115 °C erhitzten Stahlzylinder

* Cassurit HML; Hoechst AG;

wird ein Baumwoll/Polyester-Gewebe von 120 g/m² bei 4 bar Anpreßdruck kaschiert, Vernetzung bei 120-140-160 °C. Die aus Dispersionen erzeugten PUR-Schichten haften hervorragend auf dem Textil, was eine ausgezeichnete Wasch- und CR-Beständigkeit garantiert.

### Beispiel 8

8.1 PUR-Haftstrichzubereitung zur thermoaktiven Kaschierung (erfindungsgemäß)

A/1 750 g 50 %ige PUR-Lösung in DMF/TOL/MEK = 55/25/20, 25 000 mPa.s/25 °C, hergestellt wie folgt : 2 500 g (1,0 Mol) Diethylenglykol-polyadipat werden in der Schmelze bei 100 °C mit 230 g (1,32 Mol) Toluylendiisocyanat-2,4/2,6 (Isomerengemisch 65/35) zu einem NCO-Prepolymeren umgesetzt. Hierzu fügt man 1 520 g DMF, 690 g TOL und eine Lösung von 13,5 g (0,15 Mol) Butandiol-1,4 und 17,7 g (0,15 Mol) Hexandiol-1,6 in 550 g MEK und führt die Polyaddition bei 80 °C weiter. Durch Zugabe von 2,0 g Butanonoxim wird die NCO-Reaktion abgestoppt.

A/2 160 g 40 %ige PUR-Lösung in DMF, 46 000 mPa.s/25 °C 2250 Teile (1,0 Mol) Butandiol-1,4-polyadipat und 216 Teile (2,4 Mol) 1,4-Butandiol werden mit 851 Teilen (3,4 Mol) 4,4'-Diisocyanatdiphenylmethan zu einer Polyurethanlösung in 4976 Teilen DMF/Toluol (3 : 2) umgesetzt. Man erreicht bei 80 °C eine ungefähre Viskosität von 17 000 mPa.s und bricht die Polyadditionsreaktion mit 50 Teilen Butanonoxim ab. Es wird eine 40 %ige Lösung mit einer Viskosität von 46 000 mPa.s/23 °C erhalten.

B) 35 g Melaminharz (wie in Beispiel 1.1) lösemittelfrei

10 g Katalysatorlösung, wie in 1.1

C) 45 g blockiertes aromatisches Polyisocyanat wie in 6.1

1 000 g

Die PUR-Zubereitung ist ca. 50 %ig und hat eine Viskosität von 28 000 mPa.s bei 25 °C.

8.2 PUR-Deckstrichlösung wie 1.2

8.3 Zweistrich-Transferbeschichtung mit thermoaktivem Haftstrich (erfindungsgemäße Verwendung)

Auf einen 30 g/m² schweren Deckstrich, hergestellt aus der Streichpaste gemäß Beispiel 1.2, wird nach der in Beispiel 1.3 beschriebenen Technik der thermoaktive Haftstrich aus der Paste 8.1 gerakelt, Trockenauflage ca. 30 g/m². Nach Thermoaktivierung bei 80 °C wird ein gebundenes Vlies von 200 g/m² Warengewicht kaschiert. Vernetzung 130-150-160 °C. Der Artikel, verwendbar für Täschnerwaren, zeichnet sich durch hervorragende Haftung PUR/Substrat aus.

### Beispiel 9

9.1 PUR-Haftstrichzubereitung zur thermoaktiven Kaschierung

A/1 800 g 50 %ige PUR-Lösung in DMF/TOL/IPA = 50 : 25 : 25, 30 000 mPa.s/25 °C, hergestellt wie folgt : 2 000 g (1,0 Mol) Dihydroxy-propylenglykolpolyether werden mit 278 g (1,60 Mol) Toluylendiisocyanat-2,4/2,6 (Isomerengemisch 80/20) bei 100 °C in der Schmelze zum NCO-Prepolymer umgesetzt. Nach Lösen des Prepolymers in 1 174 g DMF und 387 g TOL läßt man eine Lösung von 35,5 g (0,40 Mol) N-Methylpropanolamin-1,2 in 200 g TOL bei 80 °C zufließen. Nach 30 Minuten Reaktion bei dieser Temperatur fügt man bei 40 °C eine Lösung von 34,0 g (0,20 Mol) Isophorondiamin in 587 g IPA hinzu. Schließlich wird die Polyaddition durch Zugabe von 3 g Diisobutylketoxim abgestoppt.

A/2 100 g 40 %ige PUR-Lösung in DMF/TOL/MEK = 37 : 35 : 28, 30 000 mPa.s/25 °C, hergestellt wie folgt : Eine Lösung von 2000 Teilen (1,0 Mol) eines linearen Propylenoxid-Polyethers, gestartet mit 1,2-Propandiol (Molekulargewicht 2000) in 660 Teilen DMF wird mit 676 Teilen (2,7 Mol) 4,4'-Diisocyanatodiphenylmethan umgesetzt. Das erhaltene Prepolymer läßt man mit 150 Teilen (0,05 Mol) eines trifunktionellen Propylenoxid-Polyethers, gestartet mit Trimethylolpropan und mit einem mittleren Molekulargewicht von 3000, und mit 153 Teilen (1,7 Mol) 1,4-Butandiol reagieren.

Während der Umsetzung wird portionsweise mit 1000 Teilen DMF, 1580 Teilen Toluol und 1260 Teilen MEK zu einer 40 %igen Lösung verdünnt. Mit weiteren 25 Teilen 4,4'-Diisocyanatodiphenylmethan wird die gewünschte Viskosität erreicht. Durch Zugabe von 15 Teilen Butanonoxim wird die Reaktion abgebrochen.

Man erhält eine viskositätsstabile Lösung mit 30 000 mPa.s/23 °C.

B) 40 g Melaminharz (wie in Beispiel 4.1), 70 %ig in i-Butanol

10 g Katalysatorlösung wie in 3.1

C) 50 g blockiertes Polyisocyanat wie in 1.1

1 000 g

Die PUR-Zubereitung ist ca. 51 %ig, die Viskosität beträgt 28 000 mPa.s/25 °C.

9.2 PUR-Deckstrichlösung (nicht erfindungsgemäß)

2 000 g (1,0 Mol) Dihydroxy-oxytetramethylen-polyether werden mit 490 g (2,20 Mol) Isophorondiisocyanat in der Schmelze bei 100 °C zum NCO-Prepolymer umgesetzt. Dieses wird in 2 800 g TOL gelöst. Bei 20 bis 25 °C läßt man hierzu eine Lösung von 315 g (1,20 Mol) 4,4'-Diaminodicyclohexylmethan in 2 800 g

EP 0 122 554 B1

IPA und 900 g Ethylglykol fließen. Die Polyadditionsreaktion wird durch Zugabe von 1,0 g Diisobutylamin abgestoppt. Viskosität der 30 %igen Lösung : 32 000 mPa.s/25 ˚C.

9.3 Zweistrich-Transferbeschichtung mit thermoaktivem Haftstrich (erfindungsgemäße Verwendung)

Die Lösung 9.2 wird nach Pigmentieren mit 10 % einer handelsüblichen Pigmentpaste mit 0,4 %, bezogen auf PUR-Feststoff, eines Lichtschutzmittels auf Tetramethylpiperidin-Basis (Tinuvin 292/Ciba-Geigy, CH-Basel) versetzt. Auf einen 30 g/m² schweren Deckstrich aus dieser Streichpaste wird nach der in Beispiel 1.3 beschriebenen Technik der thermoaktive Haftstrich 9.1 gerakelt, Trockenauflage ca. 30 g/m². Nach Thermoaktivierung bei 120 ˚C wird eine gerauhte Baumwollware, 240 g/m², kaschiert, Anpreßdruck 4 bar, Vernetzung bei 130-150-160 ˚C. Der außerordentlich hydrolysefeste Artikel kann als Polstermaterial verwendet werden. Die Haftung der PUR-Schicht zum Textil ist ausgezeichnet.

Beispiel 10

10.1 PUR-Hafstrichzubereitung zur thermoaktiven Kaschierung (erfindungsgemäß)

A/1 700 g 30 %ige PUR-Lösung in DMF/Ethylacetat = 20 : 80, 35 000 mPa.s/25 ˚C ; hergestellt wie folgt : 1 000 g (0,50 Mol) Ethylenglykoladipat, 1 000 g (0,50 Mol) Diethylenglykoladipat werden in der Schmelze mit 174,0 g (1,0 Mol) Toluylendiisocyanat-2,4/2,6 (Isomerengemisch 80/20) zum Polyesterpolyurethan umgesetzt und unter Kühlung granuliert, 300 g Granulat löst man in 140 g DMF und 560 g Ethylacetat.

A/2 200 g 98 %ige PUR-Anpastung in Ethylacetat, 22 000 mPa.s/25 ˚C ; hergestellt wie folgt : 1 000 g Adipinsäurepolyester aus Diethylenglykol und Trimethylolpropan (97 : 3 molares Verhältnis ; OH-Zahl 28) werden mit 80 g eines Polyisocyanats, NCO-Gehalt 13 %, 75 %ig in Ethylacetat, bei 70 ˚C umgesetzt. Das Polyisocyanat wird durch Umsetzung von Trimethylolpropan, Butandiol-1,3 mit Toluylendiisocyanat erhalten.

B) 25 g Melaminharz (wie in Beispiel 1.1), lösemittelfrei

5 g Katalysatorlösung wie in 1.1

C) 70 g 75 %iges Polyisocyanat aus Trimethylolpropan, Butendiol-1,3 und TDI) in Ethylacetat, NCO-Gehalt 13 % (s. o., Herstellung unter A/2 beschrieben)

1 000 g

Die PUR-Haftstrichzubereitung ist ca. 48 %ig, Viskosität 28 000 mPa.s/25 ˚C.

10.2 PUR-Deckstrichlösung wie 5.2

10.3 Zweistrich-Transferbeschichtung mit thermoaktivem Haftstrich (erfindungsgemäße Verwendung)

Auf einen 30 g/m² schweren Deckstrich aus der Deckstrichpaste nach 5.2 wird nach der in Beispiel 1.3 beschriebenen Technik der thermoaktive Haftstrich 10.1 gerakelt ; Trockenauflage 22 g/m², Trocknung erfolgt im Beschichtungskanal bei 20 bis 30 ˚C. Nach thermischer Aktivierung am heißen Zylinder (125 ˚C) wird ein Zellwollgewebe von weniger als 100 g/m² bei 5 bar Druck kaschiert. Vernetzung bei 100-120-150 ˚C.

Die Ware ist gut Wasch- und CR-beständig.

**Patentansprüche**

1. Verwendung von 30 bis 80 %igen Polyurethanzubereitungen in Form von Lösungen oder Dispersionen, die in ihrem Feststoffanteil aus

I. 100 Gew.-Teilen relativ weicher Polyurethane A) aus höhermolekularen Polyolen, 0,1 bis 2,5 Mol Kettenverlängerungsmitteln pro Mol höhermolekulare Polyole und aliphatischen und/oder aromatischen Polyisocyanaten,

II. 4 bis 30 Gew.-Teilen einer Vernetzerkombination aus

B) 0,5 bis 20 Gew.-Teilen an Formaldehydharzen und

C) 0,5 bis 20 Gew.-Teilen an aliphatischen und/oder aromatischen, an ihren NCO-Gruppen gegebenenfalls blockierten Polyisocyanaten wobei die Summe 4-30 Gew.-Teile ausmacht und

III. üblichen Mengen an an sich bekannten Zusatzstoffen bestehen, als thermoaktivierbare Haftstriche in Mehrstrich-Thermoaktiv-Umkehrbeschichtungsverfahren und deren thermoaktivierte Kaschierung unter Walzenandruck bei Temperaturen bis 16ϑ ˚C mit textilen Unterlagen und anschließende Vernetzung des Mehrschichten/Textil-Verbundes bei Temperaturen bis 180 ˚C.

2. Verwendung von Zubereitungen nach Anspruch 1, dadurch gekennzeichnet, daß die Polyurethane A) in ihrem Feststoff aus höhermolekularen Polyolen mit Molekulargewichten von 600 bis 6000, 0,1 bis 2,5 Mol pro Mol höhermolekularen Polyolen aus gegebenenfalls ionische Gruppen enthaltenden Dialkoholen, Aminoalkoholen, Diaminen und/oder Hydrazinhydrat als Kettenverlängerungsmitteln und aliphatischen oder aromatischen Polyisocyanaten aufgebaut sind.

3. Verwendung von Zubereitungen nach Ansprüchen 1 und 2, dadurch gekennzeichnet, daß sie aus 5 bis 25 Gew.-teilen einer Vernetzerkombination II) aus

B) 1 bis 15 Gew.-Teilen an Formaldehydharzen und deren sauren Vernetzungskatalysatoren und

C) 3 bis 15 Gew.-Teilen an aliphatischen und/oder aromatischen, an ihren NCO-Gruppen gegebenenfalls blockierten Polyisocyanaten wobei die Summe 5 bis 25 Gew.-Teile ausmacht bestehen.

4. Verwendung von Zubereitungen nach Ansprüchen 1 bis 3, dadurch gekennzeichnet, daß sie aus 30 bis 70 %igen Lösungen mit einem Feststoffanteil aus

I. 100 Gew.-Teilen relativ weicher Polyurethane A) mit einem Erweichungsbereich unter 150 °C, aus höhermolekularen Polyolen des Molekulargewichts 600 bis 6000, 0,1 bis 1,0 Mol pro Mol höhermolekularen Polyols an Dialkoholen, Aminoalkoholen, Diaminen und/oder Hydrazinhydrat und aliphatischen und/oder aromatischen Polyisocyanaten,

II. 5 bis 25 Gew.-Teilen einer Vernetzerkombination aus

B) 1 bis 15 gew.-Teilen an Melamin-Formaldehydharzen und deren sauren Vernetzungskatalysatoren und

C) 3 bis 15 Gew.-Teilen an aliphatischen und/oder aromatischen, an ihren NCO-Gruppen gegebenenfalls mit Butanonoxim, Acetessigsäurealkylestern und/oder Malonsäurealkylestern blockierten Polyisocyanaten wobei die Summe 5 bis 25 Gew.-Teile ausmacht und

III. üblichen Mengen an an sich bekannten Zusatzstoffen bestehen.

5. Verwendung von Zubereitungen nach Ansprüchen 1 bis 3, dadurch gekennzeichnet, daß sie aus 30 bis 70 %igen wäßrigen Dispersionen mit einem Feststoffanteil aus

I. 100 Gew.-Teilen relativ weicher Polyurethane A) mit einem Erweichungsbereich unter 150 °C aus höhermolekularen Polyolen mit Molekulargewichten von 600 bis 6000, 0,1 bis 2,5 Mol pro Mol höhermolekulare Polyole an gegebenenfalls ionische Gruppen enthaltenden Dialkoholen, Aminoalkoholen, Diaminen und/oder Hydrazinhydrat als Kettenverlängerungsmitteln und aliphatischen oder aromatischen Polyisocyanaten,

II. 5 bis 25 Gew.-Teile einer Vernetzerkombination aus

B) 1 bis 15 Gew.-Teilen an Melaminformaldehydharzen und deren sauren Vernetzungskatalysatoren und

C) 3 bis 15 Gew.-Teilen an aromatischen, an ihren NCO-Gruppen blockierten Polyisocyanaten wobei die Summe 5 bis 25 Gew.-Teile ausmacht und

III. üblichen Mengen an an sich bekannten Zusatzmitteln bestehen.

6. Verwendung gemäß den Ansprüchen 1 bis 5 durch Rakeln der Polyurethanzubereitungen auf Deck- oder Deck- plus Zwischenstriche tragende Trennpapiere oder ähnliche einstweilige Träger, Trocknen der Haftstrichschicht bei Temperaturen bis 100 °C, Kaschieren des textilen Substrats unter Walzenandruck an bis 160 °C heißen Zylindern und anschließender Vernetzung bei erhöhten Temperaturen bis 180 °C und Entfernung des einstweiligen Trägers.

## Claims

1. The use of 30 to 80 % strength polyurethane formulations in the form of solutions or dispersions, whose solids content comprises

I. 100 parts by weight of relatively soft polyurethanes

A) made from high molecular weight polyols, 0.1 to 2.5 mol of chain extenders per mol of high molecular weight polyols and aliphatic and/or aromatic polyisocyanates,

II. 4 to 30 parts by weight of a crosslinking agent combination composed of

B) 0.5 to 20 parts by weight of formaldehyde resins and

C) 0.5 to 20 parts by weight of aliphatic and/or aromatic polyisocyanates, which may if desired be blocked at their NCO groups, the sum making up 4-30 parts by weight and

III. Customary amounts of additives known per se, as heat-activatable anchor coatings in multilayer heat-sensitive reverse roll coating processes, and heat-activated lamination of the said anchor coatings under roll pressure at temperatures up to 160 °C with textile backings and subsequent crosslinking of the multilayer/textile composite at temperatures up to 180 °C.

2. The use of formulations according to Claim 1, characterized in that the solid material of the polyurethanes A) is formed from high molecular weight polyols having molecular weights from 600 to 6000, 0.1 to 2.5 mol, per mol of high molecular weight polyols, of dialcohols, aminoalcohols, diamines, each of which may if desired contain ionic groups, and/or hydrazine hydrate as chain extenders and aliphatic or aromatic polyisocyanates.

3. The use of formulations according to Claims 1 and 2, characterized in that they comprise 5 to 25 parts by weight of a crosslinking agent combination II) made from

B) 1 to 15 parts by weight of formaldehyde resins and acidic crosslinking catalysts thereof and

C) 3 to 15 parts by weight of aliphatic and/or aromatic polyisocyanates which if desired may be blocked at their NCO groups, the sum making up 5 to 25 parts by weight.

4. The use of formulations according to Claims 1 to 3, characterized in that they comprise 30 to 70 % strength solutions having a solids content composed of

I. 100 parts by weight of relatively soft polyurethanes

A) having a softening range below 150 ˚C, made from high molecular weight polyols of molecular weight 600 to 6000, 0.1 to 1.0 mol, per mol of high molecular weight polyol, of dialcohols, aminoalcohols, diamines and/or hydrazine hydrate and aliphatic and/or aromatic polyisocyanates,

II. 5 to 25 parts by weight of a crosslinking agent combination made from

B) 1 to 15 parts by weight of melamine-formaldehyde resins and acidic crosslinking catalysts thereof and

C) 3 to 15 parts by weight of aliphatic and/or aromatic polyisocyanates, which may if desired be blocked at their NCO groups with butanone oxime, alkyl acetoacetates and/or alkyl malonates, the sum making up 5 to 25 parts by weight, and

III. Customary amounts of additives known per se.

5. The use of formulations according to Claims 1 to 3, characterized in that they comprise 30 to 70 % strength aqueous dispersions having a solids content composed of

I. 100 parts by weight of relatively soft polyurethanes

A) having a softening range below 150 ˚C made from high molecular weight polyols with molecular weights from 600 to 6000, 0.1 to 2.5 mol, per mol of high molecular weight polyols, of dialcohols, aminoalcohols, diamines, each of which may if desired contain ionic groups, and/or hydrazine hydrate as chain extenders and aliphatic or aromatic polyisocyanates,

II. 5 to 25 parts by weight of a crosslinking agent combination made from

B) 1 to 15 parts by weight of melamine formaldehyde resins and acidic crosslinking catalysts thereof and

C) 3 to 15 parts by weight of aromatic polyisocyanates which have been blocked at their NCO groups, the sum making up 5 to 25 parts by weight, and

III. Customary amounts of additives known per se.

6. The use according to Claims 1 to 5 of the polyurethane formulations by knife application to release papers carrying top coatings or top coatings plus intermediate coatings or to similar temporary backings, drying the anchor coating at temperatures up to 100 ˚C, laminating the textile substrate under roll pressure on drums heated to 160 ˚C and subsequently crosslinking at elevated temperatures up to 180 ˚C and removing the temporary backing.


**Revendications**

1. Utilisation de préparations à 30-80 % de polyuréthanne sous forme de solutions ou de dispersions, dont la fraction de matières solides est constituée

I. de 100 parties en poids de polyuréthannes A) relativement mous dérivés de polyols de poids moléculaire élevé, de 0,1 à 2,5 moles d'agents d'allongement de chaîne par mole de polyols de poids moléculaire élevé, et de polyisocyanates aliphatiques et/ou aromatiques,

II. de 4 à 30 parties en poids d'une association d'agents de réticulation comprenant

B) 0,5 à 20 parties en poids de résines de formaldéhyde et

C) 0,5 à 20 parties en poids de polyisocyanates aliphatiques et/ou aromatiques, à groupes NCO éventuellement bloqués, la somme représentant 4 à 30 parties en poids, et

III. de quantités classiques d'additifs connus, comme couches adhésives susceptibles de thermo-activation dans des procédés d'enduction inverse thermo-active multicouche, et leur doublage thermo-activé sous la pression de cyclindres à des températures allant jusqu'à 160 ˚C avec des substrats textiles, puis réticulation du composite multicouche/textile à des températures allant jusqu'à 180 ˚C.

2. Utilisation de préparations suivant la revendication 1, caractérisée en ce que la matière solide des polyuréthannes A) est constituée de polyols de poids moléculaire élevé, ayant des poids moléculaires de 600 à 6000, de 0,1 à 2,5 moles, par mole de polyols de poids moléculaire élevé, de diols contenant éventuellement des groupes iodines, d'amino-alcools, de diamines et/ou d'hydrate d'hydrazine comme agents d'allongement de chaîne et de polyisocyanates aliphatiques ou aromatiques.

3. Utilisation de préparations suivant les revendications 1 et 2, caractérisée en ce que les compositions sont constituées de 5 à 25 parties en poids d'une association II) d'agents de réticulation comprenant

B) 1 à 15 parties en poids de résines formaldéhyde et de leurs catalyseurs acides de réticulation et

C) 3 à 15 parties en poids de polyisocyanates aliphatiques et/ou aromatiques, à groupes NCO éventuellement bloqués la somme représentant 5 à 25 parties en poids.

4. Utilisation de préparations suivant les revendications 1 à 3, caractérisée en ce que les compositions sont constituées de solutions à 30-70 % dont la fraction de matières solides comprend

I. 100 parties en poids de polyuréthannes A) relativement mous ayant une plage de ramollissement inférieure à 150 ˚C, de polyols de poids moléculaire élevé, dont le poids moléculaire a une valeur de 600 à 6000, 0,1 à 1,0 mole, par mole de polyols de poids moléculaire élevé, de diols, d'amino-alcools, de diamines et/ou d'hydrate d'hydrazine et des polyisocyanates aliphatiques et/ou aromatiques,

II. 5 à 25 parties en poids d'une association d'agents de réticulation comprenant

B) 1 à 15 parties en poids de résines mélamine-formaldéhyde et de leurs catalyseurs acides de réticulation et

C) 3 à 15 parties en poids de polyisocyanates aliphatiques et/ou aromatiques, à groupes NCO éventuellement bloqués avec la butanoneoxime, des esters alkyliques d'acide acétylacétique et/ou des esters alkyliques d'acide malonique, la somme représentant 5 à 25 parties en poids et

III. des quantités classiques d'additifs connus.

5. Utilisation de préparations suivant les revendications 1 à 3, caractérisée en ce que les compositions sont constituées de dispersions aqueuses de 30-70 % dont la fraction de matières solides comprend

I. 100 parties en poids de polyuréthannes A) relativement mous ayant une plage de ramollissement inférieure à 150 °C, dérivés de polyols de poids moléculaire élevé ayant un poids moléculaire de 600 à 6000, 0,1 à 2,5 moles, par mole de polyols de poids moléculaire élevé, de diols contenant éventuellement des groupes ioniques, d'amino-alcools, de diamines et/ou d'hydrate d'hydrazine comme agents d'allongement de chaîne et des polyisocyanates aliphatiques ou aromatiques

II. 5 à 25 parties en poids d'une association d'agents de réticulation comprenant

B) 1 à 15 parties en poids de résines mélamine-formaldéhyde et leurs catalyseurs acides de réticulation et

C) 3 à 15 parties en poids de polyisocyanates aromatiques à groupes NCO bloqués, la somme représentant 5 à 25 parties en poids, et

III. des quantités classiques d'additifs connus.

6. Utilisation suivant les revendications 1 à 5, par application à la racle des préparations de polyuréthanne sur des papiers de séparation portant des enduits de protection ou des enduits de protection plus des enduits intermédiaires, ou sur des supports provisoires similaires, séchage de la couche d'enduit adhésif à des températures allant jusqu'à 100 °C, doublage du substrat textile sous la pression de cylindres, sur des cylindres chauds atteignant 160 °C, puis réticulation à températures élevées jusqu'à 180 °C et enlèvement du support provisoire.